# EUROPEAN PATENT SPECIFICATION

(11) **EP 4 283 733 B1**
(45) Date of publication and mention of the grant of the patent: **30.09.2026**
(21) Application number: 23740438.9
(22) Date of filing: 11.01.2023
(51) Int. Cl.: H01M 10/04, H01M 50/183, H01M 50/184, H01M 50/176, H01M 50/178, H01M 50/126, H01M 50/124, H01M 50/105, H01M 50/129, H01M 50/131, H01M 10/058, H01M 50/133

(54) **POUCH-TYPE SECONDARY BATTERY AND MANUFACTURING METHOD THEREFOR**
BEUTELARTIGE SEKUNDÄRBATTERIE UND HERSTELLUNGSVERFAHREN DAFÜR
BATTERIE SECONDAIRE DE TYPE POCHE ET SON PROCÉDÉ DE FABRICATION

(30) Priority: 14.01.2022 KR 20220005802
(43) Date of publication of application: 29.11.2023
(73) Proprietor: LG Energy Solution, Ltd., Seoul 07335 (KR)
(72) Inventor: NA, Seung Ho, Daejeon 34122 (KR); CHOI, Kwang Hee, Daejeon 34122 (KR); HAN, Song Hwa, Daejeon 34122 (KR); LEE, Yoon Beom, Daejeon 34122 (KR); YOON, Jun Ho, Daejeon 34122 (KR); LEE, Yeong Jae, Daejeon 34122 (KR)
(74) Representative: Plasseraud IP
(86) International application number: PCT/KR2023/000475
(87) International publication number: WO 2023/136594

(56) References cited:
- KR-A- 20100 126 226
- KR-A- 20130 064 465
- KR-A- 20140 062 294
- KR-A- 20150 110 983
- KR-A- 20160 120 089
- KR-A- 20160 141 654
- KR-A- 20170 111 636
- US-A1- 2013 029 214

## Description

### [Technical Field]

The present disclosure relates to a pouch-type secondary battery and a manufacturing method thereof, and it relates to a pouch-type secondary battery in which there is almost no difference in average thickness between the lower and upper pouches in the sealed area even after the upper and lower pouches go through a sealing process of heat-sealing by introducing upper and lower pouches with different thicknesses, and a manufacturing method thereof.

### [Background Art]

Technology development and demand for mobile devices are increasing, and the demand for secondary batteries as an energy source to replace fossil fuels is rapidly increasing. Accordingly, much research on secondary batteries that can meet various needs are being conducted.

In terms of the shape of a battery case, secondary batteries can be classified into cylindrical batteries and prismatic batteries in which electrode assemblies are embedded in cylindrical and prismatic metal cans, respectively, and pouch-type batteries in which electrode assemblies are embedded in pouch-type cases made of aluminum laminate sheets. In addition, in terms of materials, there is a high demand for lithium secondary batteries such as lithium-ion batteries, lithium-ion polymer batteries, etc., which are excellent in terms of high energy density, discharge voltage, and output stability.

Among them, in terms of shape, the pouch-type battery is in high demand due to its advantages in terms of being made with a thin thickness, being easy to stack and arrange, and being able to partially change its shape. The pouch-type battery has a structure in which an electrode assembly and an electrolyte are embedded in a pouch-shaped laminate sheet capable of accommodating the electrode assembly, and a resin layer of a laminate sheet is heat-sealable.

The pouch-type battery is heat-sealed by applying heat and pressure to laminate sheets overlapping vertically along the circumference of the battery case, so that the electrode assembly is not exposed to the outside and there is no leakage of an electrolyte. In addition, electrode leads protrude outside the battery case of the pouch-type battery, and a lead film is attached to the surface of the electrode lead, and the lead film made of an insulating resin material is heat-sealed together with a laminate sheet, that is, the pouch, to seal the surroundings of the electrode lead more tightly.

However, when the pouches are heat-sealed, a pair of upper and lower pouches surrounding the electrode assembly and the electrode leads often have a difference in thickness after heat-sealing. In order to seal the electrode lead and the pouch, heat and pressure are applied using a pair of upper and lower sealing blocks. In the sealing process, the lower sealing block is raised to support the lower pouch and the electrode lead, and then the upper sealing block is lowered to apply heat and pressure. Accordingly, since more heat is supplied to the lower pouch and the electrode lead, it becomes easier for the thickness of the resin layer of the lower pouch to become thinner compared to that of the upper pouch.

When the thicknesses of the upper and lower pouches are asymmetrical, the relatively thin lower pouch becomes more vulnerable to pressure. For example, when the pressure below the prescribed endurance limit is applied to the pouch-type battery, the upper pouch endures but the lower pouch bursts, or the resin layer of the lower pouch is elongated and broken due to the internal pressure applied by the gas generated in the pouch, causing a problem in which the sealing part opens.

In the prior art, pouch-type secondary batteries are known from e. g. US2013029214A1, which describes a laminate-cased battery that comprises at least three layers, wherein the upper and lower laminate exhibit the same thickness. KR20160141654A discloses a pouch-type battery cell with a heat-sealed peripheral part of two laminated bodies with four layers each, wherein the laminated bodies exhibit the same thickness. KR20150110983A describes a pouch-type secondary battery with a mutlilayered upper pouch sheet and a multilayered lower pouch sheet.

### [Disclosure]

### [Technical Problem]

The present disclosure is directed to solve the above-mentioned problems, and is directed to provide a pouch-type secondary battery in which the thickness of an upper pouch and a lower pouch of a sealed area can form a uniform thickness with little deviation even after a sealing process of heat-sealing by introducing a battery case in which the thickness of the lower pouch is thicker than the thickness of the upper pouch, and a manufacturing method thereof.

### [Technical Solution]

The present disclosure relates to a pouch-type secondary battery. In an exemplary embodiment, a pouch-type secondary battery according to the present disclosure includes: an electrode assembly; an electrode lead extending from an electrode tab of the electrode assembly; an upper pouch covering upper surfaces of the electrode assembly and the electrode lead; and a lower pouch covering lower surfaces of the electrode assembly and the electrode lead. In addition, the upper pouch and the lower pouch include a sealed area where the edges are sealed.

In a specific example, the average thickness of the sealed area of the upper pouch and the average thickness of the sealed area of the lower pouch satisfy Equation 1 below. $0.95 \leq {{D}^{1}}_{TOP} / {{D}^{1}}_{BOTTOM} \leq 1.05$

In Equation 1,
D¹_{TOP} represents the average thickness of the sealed area of the upper pouch, and D¹_{BOTTOM} represents the average thickness of the sealed area of the lower pouch.

In addition, the average thickness of the unsealed area of the upper pouch and the average thickness of the unsealed area of the lower pouch satisfy Equation 2 below. $0.65 \leq {{D}^{2}}_{TOP} / {{D}^{2}}_{BOTTOM} \leq 0.95$

**In** Equation 2,
D²_{TOP} represents the average thickness of the unsealed area of the top pouch, and D²_{BOTTOM} represents the average thickness of the unsealed area of the bottom pouch.

In the present disclosure, the deviation between the average thickness of the sealed area of the upper pouch and the average thickness of the sealed area of the lower pouch is within 10% or within 5%, and the average thickness of the unsealed area of the upper pouch is smaller than the average thickness of the unsealed area of the lower pouch. In a specific example, the average thickness of the sealed area of the upper pouch and the average thickness of the sealed area of the lower pouch are equal to each other.

In addition, the present disclosure provides a manufacturing method of a pouch-type secondary battery. In one example, the manufacturing method of a pouch-type secondary battery according to the present disclosure includes: preparing an electrode assembly, an electrode lead extending from an electrode tab of the electrode assembly, an upper pouch covering upper surfaces of the electrode assembly and the electrode tab, and a lower pouch covering lower surfaces of the electrode assembly and the electrode tab; and positioning the electrode lead and the electrode assembly between the upper pouch and the lower pouch, and sealing the edges of the upper pouch and the lower pouch by pressing and heating with a sealing device.

In a specific example, the average thickness of the sealed area of the upper pouch and the average thickness of the sealed area of the lower pouch satisfy Equation 1 below. $0.95 \leq {{D}^{1}}_{TOP} / {{D}^{1}}_{BOTTOM} \leq 1.05$

In Equation 1,
D¹_{TOP} represents the average thickness of the sealed area of the upper pouch, and D¹_{BOTTOM} represents the average thickness of the sealed area of the lower pouch.

In addition, the average thickness of the unsealed area of the upper pouch and the average thickness of the unsealed area of the lower pouch satisfy Equation 2. $0.65 \leq {{D}^{2}}_{TOP} / {{D}^{2}}_{BOTTOM} \leq 0.95$

In Equation 2,
D²_{TOP} represents the average thickness of the unsealed area of the top pouch, and D²_{BOTTOM} represents the average thickness of the unsealed area of the bottom pouch.

In the present disclosure, the deviation between the average thickness of the sealed area of the upper pouch and the average thickness of the sealed area of the lower pouch is within 10% or within 5%, and the average thickness of the unsealed area of the upper pouch is smaller than the average thickness of the unsealed area of the lower pouch.

### [Advantageous Effects]

In the pouch-type secondary battery of the present disclosure having the above configuration, by introducing a battery case in which the thickness of the lower pouch is thicker than that of the upper pouch, even if the thickness of the lower pouch is reduced during the sealing process of heat-sealing, the upper pouch and the lower pouch in the sealed area after the sealing process can be formed uniformly with almost no thickness deviation.

Accordingly, in the pouch-type secondary battery of the present disclosure, the thickness of the lower pouch is formed relatively thin compared to the upper pouch after sealing, so that the lower pouch is more vulnerable to pressure, and due to the internal pressure of the gas generated in the battery case, the resin layer of the lower pouch is elongated and broken, so it is possible to improve structural stability by effectively preventing the conventional problem of the sealing part opening.

### [Brief Description of the Drawings]

FIG. 1 is a diagram of a pouch-type secondary battery before being sealed by a sealing device.
FIG. 2 is a diagram of a pouch-type secondary battery sealed by a sealing device.
FIG. 3 is a diagram showing an electrode lead before being pressed and heated with a sealing device and upper and lower pouches.
FIG. 4 is a diagram showing upper and lower pouches surrounding electrode leads after being pressed and heated with a sealing device.
FIG. 5 is a partially enlarged view of the "X-X" cross section of FIG. 2.
FIG. 6(a) and (b) are partially enlarged views of "Y" and "Z" of FIG. 5, respectively.
FIG. 7(a) and (b) are partially enlarged views of upper and lower pouches according to another exemplary embodiment of the present disclosure, respectively.
FIG. 8(a) and (b) are partially enlarged views of upper and lower pouches according to another exemplary embodiment of the present disclosure, respectively.

### [Best Mode for Carrying Out the invention]

Since the present disclosure can apply various modifications and have various embodiments, specific exemplary embodiments will be exemplified in the diagrams and described in detail in the description.

The terms "comprise" or "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate, etc. is disposed "on" another part, this includes not only a case in which one part is disposed "directly on" another part, but a case in which a third part is interposed therebetween. In contrast, when a part of a layer, a film, a region or a plate, etc. is disposed "under" another part, this includes not only a case in which one part is disposed "directly under" another part, but a case in which a third part is interposed therebetween. In addition, in this application, "on" may include not only a case of disposed on an upper part but also a case of disposed on a lower part.

The present disclosure relates to a pouch-type secondary battery. In an exemplary embodiment, a pouch-type secondary battery according to the present disclosure includes: an electrode assembly; an electrode lead extending from an electrode tab of the electrode assembly; an upper pouch covering upper surfaces of the electrode assembly and the electrode lead; and a lower pouch covering lower surfaces of the electrode assembly and the electrode lead. In addition, the upper pouch and the lower pouch include a sealed area where the edges are sealed.

In a specific example, the average thickness of the sealed area of the upper pouch and the average thickness of the sealed area of the lower pouch satisfy Equation 1 below. $0.95 \leq {{D}^{1}}_{TOP} / {{D}^{1}}_{BOTTOM} \leq 1.05$

In Equation 1,
D¹_{TOP} represents the average thickness of the sealed area of the upper pouch, and D¹_{BOTTOM} represents the average thickness of the sealed area of the lower pouch.

And the average thickness of the unsealed area of the upper pouch and the average thickness of the unsealed area of the lower pouch satisfy Equation 2 below. $0.65 \leq {{D}^{2}}_{TOP} / {{D}^{2}}_{BOTTOM} \leq 0.95$

In Equation 2,
D²_{TOP} represents the average thickness of the unsealed area of the top pouch, and D²_{BOTTOM} represents the average thickness of the unsealed area of the bottom pouch.

The numerical value according to Equation 2 is in the range of 0.65 to 0.95, specifically in the range of 0.75 to 0.85.

In the present disclosure, the deviation between the average thickness of the sealed area of the upper pouch and the average thickness of the sealed area of the lower pouch is within 10% or within 5%, and the average thickness of the unsealed area of the upper pouch is smaller than the average thickness of the unsealed area of the lower pouch. In a specific example, the average thickness of the sealed area of the upper pouch and the average thickness of the sealed area of the lower pouch are equal to each other.

Here, the average thickness D²_{TOP} of the unsealed area of the upper pouch ranges from 130 to 165µm. For example, the average thickness D²_{TOP} of the unsealed area of the upper pouch ranges from 150 to 160µm. In addition, the average thickness D²_{BOTTOM} of the unsealed area of the lower pouch ranges from 175 to 200µm. For example, the average thickness D²_{BOTTOM} of the unsealed area of the lower pouch ranges from 180 to 190µm.

In another specific example, the upper pouch and the lower pouch has a three-layer structure each including a metal thin film layer, a first resin layer formed on the inside of the metal thin film layer facing the electrode assembly or the electrode lead, and a second resin layer formed on the outside of the metal thin film layer.

Here, the deviation between the average thickness of the metal thin film layer and the second resin layer in the unsealed area of the upper pouch and the average thickness of the metal thin film layer and the second resin layer in the unsealed area of the lower pouch is 5% or less, and the average thickness of the first resin layer in the unsealed area of the upper pouch may be smaller than the average thickness of the first resin layer in the unsealed area of the lower pouch.

In a specific example, the average thickness of the first resin layer in the unsealed area of the upper pouch and the average thickness of the first resin layer in the unsealed area of the lower pouch satisfy Equation 3 below. $0.55 \leq {{D}^{3}}_{TOP} / {{D}^{3}}_{BOTTOM} \leq 0.85$

In Equation 3,
D³_{TOP} represents the average thickness of the first resin layer in the unsealed area of the upper pouch, and D³_{BOTTOM} represents the average thickness of the first resin layer in the unsealed area of the lower pouch.

Here, the average thickness D³_{TOP} of the first resin layer in the unsealed area of the upper pouch may range from 70 to 85µm, and the average thickness D³_{BOTTOM} of the first resin layer in the unsealed area of the lower pouch may range from 100 to 125µm.

And the first resin layer may be a polypropylene (PP) resin, and the second resin layer may include a polyethylene terephthalate (PET) resin.

Here, the average thickness of the sealed area of the upper pouch and the sealed area of the lower pouch may be mainly influenced by the thickness of the first resin layer.

Meanwhile, in another example of the present disclosure, the elongation rate of the first resin layer of the lower pouch may be smaller than the elongation rate of the first resin layer of the upper pouch.

In another example of the present disclosure, the thermal conductivity of the metal thin film layer of the lower pouch may be greater than the thermal conductivity of the metal thin film layer of the upper pouch.

In addition, the present disclosure provides a manufacturing method of a pouch-type secondary battery. In one example, the manufacturing method of a pouch-type secondary battery according to the present disclosure includes preparing an electrode assembly, an electrode lead extending from an electrode tab of the electrode assembly, an upper pouch covering upper surfaces of the electrode assembly and the electrode tab, and a lower pouch covering the lower surfaces of the electrode tab and the electrode assembly; and positioning the electrode lead and the electrode assembly between the upper pouch and the lower pouch, and sealing the edges of the upper pouch and the lower pouch by pressing and heating with a sealing device.

In a specific example, the average thickness of the sealed area of the upper pouch and the average thickness of the sealed area of the lower pouch satisfy Equation 1 below. $0.95 \leq {{D}^{1}}_{TOP} / {{D}^{1}}_{BOTTOM} \leq 1.05$

In Equation 1,
D¹_{TOP} represents the average thickness of the sealed area of the upper pouch, and D¹_{BOTTOM} represents the average thickness of the sealed area of the lower pouch.

In addition, the average thickness of the unsealed area of the upper pouch and the average thickness of the unsealed area of the lower pouch satisfy Equation 2 below. $0.65 \leq {{D}^{2}}_{TOP} / {{D}^{2}}_{BOTTOM} \leq 0.95$

In Equation 2,
D²_{TOP} represents the average thickness of the unsealed area of the top pouch, and D²_{BOTTOM} represents the average thickness of the unsealed area of the bottom pouch.

**In** the present disclosure, the deviation between the average thickness of the sealed area of the upper pouch and the average thickness of the sealed area of the lower pouch is within 10% or within 5%, and the average thickness of the unsealed area of the upper pouch is smaller than the average thickness of the unsealed area of the lower pouch.

Moreover, in another example, the upper pouch and the lower pouch in the preparing step each includes a metal thin film layer, a first resin layer formed on the inside of the metal thin film layer facing the electrode assembly or the electrode lead, and a second resin layer formed on the outside of the metal thin film layer, wherein the deviation between the average thickness of the metal thin film layer and the second resin layer in the unsealed area of the upper pouch and the average thickness of the metal thin film layer and the second resin layer in the unsealed area of the lower pouch is 5% or less, and the average thickness of the first resin layer of the upper pouch is smaller than the average thickness of the first resin layer of the lower pouch.

Here, the average thickness of the first resin layer in the unsealed area of the upper pouch and the average thickness of the first resin layer in the unsealed area of the lower pouch may satisfy Equation 3 below. $0.55 \leq {{D}^{3}}_{TOP} / {{D}^{3}}_{BOTTOM} \leq 0.85$

In Equation 3,
D³_{TOP} represents the average thickness of the first resin layer in the unsealed area of the upper pouch, and D³_{BOTTOM} represents the average thickness of the first resin layer in the unsealed area of the lower pouch.

In addition, the sealing device includes an upper sealing block formed with a two-level upper sealing groove including a first upper step forming a bottom surface and a second upper step formed between the first upper step and the surface; and a lower sealing block formed with a two-level lower sealing groove including a first lower step forming a bottom surface and a second lower step formed between the first lower step and the surface, wherein the heights of the first upper step and the second upper step of the upper sealing block may be smaller than the heights of the first lower step and the second lower step of the lower sealing block.

Hereinafter, the present disclosure relates to a pouch-type secondary battery, and it relates to a pouch-type secondary battery in which the thicknesses of the upper pouch and the lower pouch after the sealing process of heat-sealing can be formed uniformly with almost no deviation by introducing a battery case in which the thickness of the lower pouch is thicker than that of the upper pouch.

According to one example for achieving this object, the present disclosure provides an electrode assembly, an electrode lead extending from an electrode tab of the electrode assembly, an upper pouch covering upper surfaces of the electrode assembly and the electrode lead, and a lower pouch covering the lower surfaces of the electrode assembly and the electrode lead, and the upper pouch and the lower pouch include sealed areas where the edges are sealed, wherein the average thickness of the sealed area of the upper pouch and the average thickness of the sealed area of the lower pouch are equal to each other, and the average thickness of the unsealed area of the upper pouch is smaller than the average thickness of the unsealed area of the lower pouch. In a specific example, the deviation between the average thickness of the sealed area of the upper pouch and the average thickness of the sealed area of the lower pouch is within 10%, or within 5%, in the range of 0.01 to 10%, or in the range of 0.1 to 5%.

In a case in which the lower sealing block of the sealing device rises during the sealing process to support the lower pouch and the electrode lead and then the upper sealing block descends to apply heat and pressure, even if the thickness of the lower pouch that first contacts the lower sealing block becomes thinner, by applying a battery case in which the thickness of the lower pouch is asymmetrically thicker than that of the upper pouch, there is almost no thickness deviation between the upper pouch and the lower pouch after the sealing process, so that the thickness imbalance between the sealed areas of the upper and lower pouches is resolved. Through this, the conventional lower pouch having a small thickness may improve the problem in which the sealing part of the lower pouch opens due to not being able to withstand the internal pressure.

Hereinafter, specific examples of the present disclosure will be described in detail with reference to the accompanying diagrams.

### [First Embodiment]

In the first embodiment, the present disclosure provides a pouch-type secondary battery in which the upper pouch and the lower pouch in the sealed area have the same level of thickness after a sealing process using a lower pouch having a thickness thicker than that of the upper pouch.

### Pouch-type secondary battery

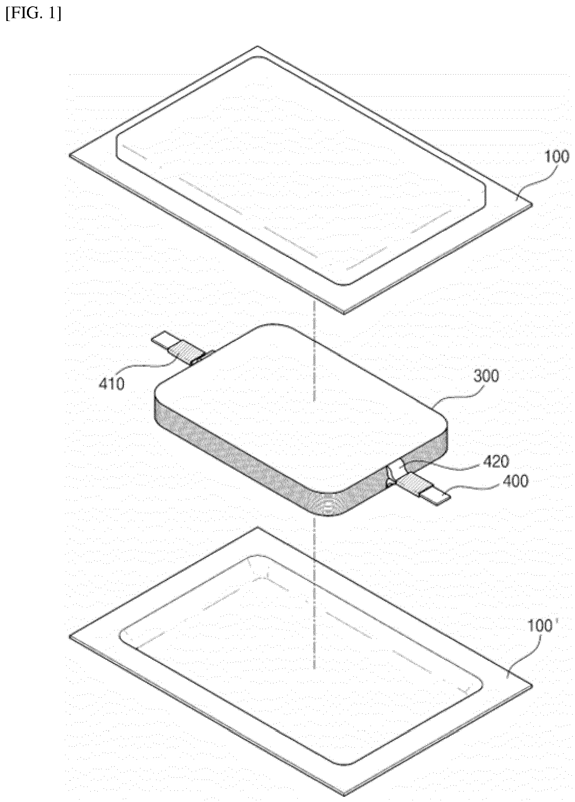

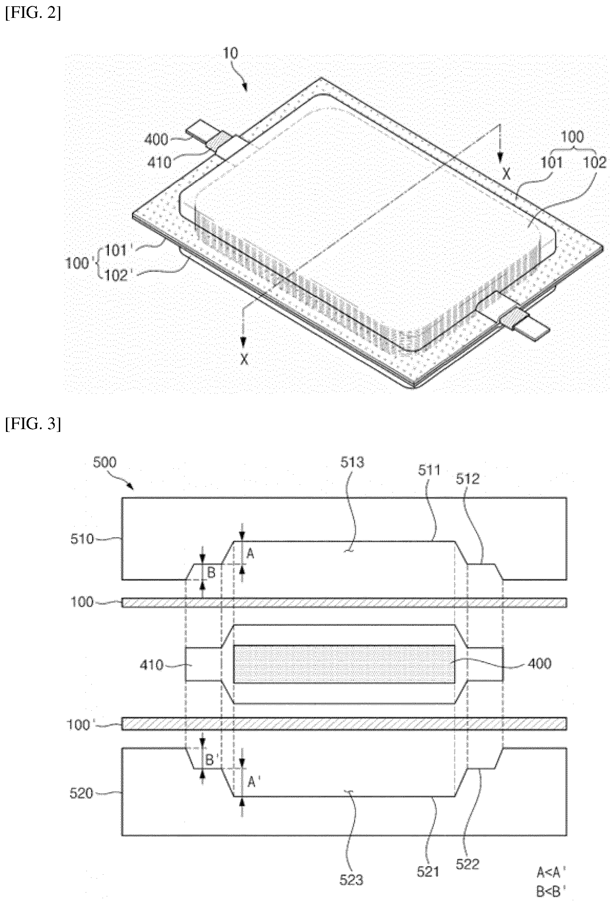

FIG. 1 is a diagram of a pouch-type secondary battery before being sealed by a sealing device, and FIG. 2 is a diagram of a pouch-type secondary battery sealed by a sealing device.

Referring to FIG. 1 and FIG. 2, in the pouch-type secondary battery 10, an upper pouch 100 and a lower pouch 100' are each disposed in the upper and lower parts of an electrode assembly 300 electrically connected to an electrode tab 420 and an electrode lead 400 wrapped around with a lead film 410 by being extended from the electrode tab 420, and the electrode lead 400 is protruded to the outside in a state in which the electrode assembly 300 is accommodated between the upper pouch 100 and the lower pouch 100' to seal the edges of the upper pouch 100 and the lower pouch 100'. Here, the upper pouch 100 and the lower pouch 100' include sealed areas 101, 101' in which their respective edges are heat-sealed by the sealing device 500, and unsealed areas 102, 102' that are unsealed.

The pouch-type secondary battery 10 has a structure in which the electrode assembly 300 and the electrolyte are embedded in a pouch-shaped laminate sheet capable of accommodating the electrode assembly 300, and it performs heat-sealing in which heat and pressure are applied to the upper pouch 100 and the lower pouch 100' including the laminate sheets so that the electrode assembly 300 is not exposed to the outside and there is no leakage of electrolyte.

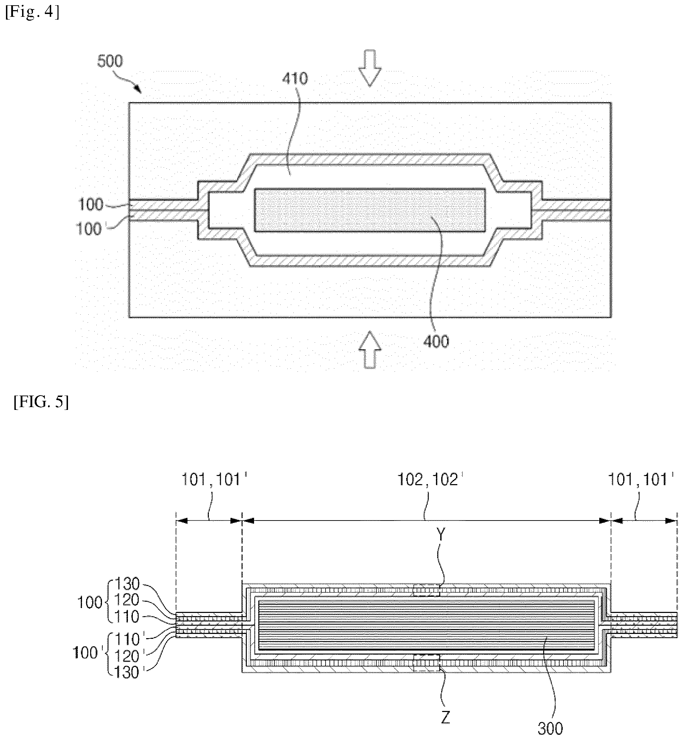

FIG. 3 shows an electrode lead and upper and lower pouches before being pressed and heated with a sealing device, and FIG. 4 shows upper and lower pouches surrounding an electrode lead after being pressed and heated with a sealing device.

Referring to FIG. 3, the sealing device 500, which is an exemplary embodiment, includes an upper sealing block 510 and a lower sealing block 520 to pressurize and heat a laminated structure in which an upper pouch 100 and a lower pouch 100' are disposed in the upper and lower parts of an electrode lead 400 from both upper and lower directions. The upper sealing block 510 has a two-level upper sealing groove 513 including a first upper step 511 forming the bottom surface and a second upper step 512 formed between the first upper step 511 and the surface. Here, in terms of the bottom surface and the surface with respect to the direction of viewing the upper sealing groove 513 inward, the bottom surface means the lowest surface of the upper sealing groove 513, and the surface means the highest surface. As such, the upper sealing groove 513 forms two steps with respect to the upper sealing block 510. The lower sealing block 520 also has a lower sealing groove 523 similar thereto. The lower sealing groove 523 forms a two-level step including a first lower step 521 constituting the bottom surface and a second lower step 522 formed between the first lower step 521 and the surface.

As described above, in the sealing process of the pouch-type secondary battery 10, the lower sealing block 520 rises to support the lower pouch 100' and the electrode lead 400, and then the upper sealing block 510 descends to apply heat and pressure. Since more heat is applied by the lower sealing block 520 first contacting the lower pouch 100', the sealing process of the pouch-type secondary battery 10 essentially applies more heat to the lower pouch 100'. That is, the lower pouch 100 ' to which more heat is supplied is more elongated than the upper pouch 100. For this reason, the sealed area 101' of the lower pouch is asymmetrically thinner than the sealed area 101 of the upper pouch.

The present disclosure intentionally sets the thickness of the lower pouch 100' thicker than the thickness of the upper pouch 100 before the sealing treatment to alleviate or correct this essential asymmetry. Meanwhile, the thickness of the upper and lower pouches 100, 100' before the sealing process can be interpreted as equivalent to the thickness of the upper and lower pouches 100, 100' in the unsealed area after the sealing process, respectively.

Referring to FIG. 4, the first upper step 511 of the upper sealing block 510 corresponds to the upper part of the electrode lead 400, while the second upper step 512 corresponds to the upper part of the lead film 410. In addition, the first lower step 521 of the lower sealing block 520 corresponds to the lower part of the electrode lead 400, while the second lower step 522 corresponds to the lower part of the lead film 410. As the electrode lead 400 is positioned inside the first upper step 511 and the first lower step 521, the interfaces between the electrode lead 400 and the upper and lower pouches 100, 100' are brought into close contact with each other. Here, the sealed area 101 of the upper pouch and the sealed area 101' of the lower pouch, which are in close contact with the electrode lead 400, have an equal level of thickness with little deviation in average thickness.

This is because the thickness of the lower pouch 100' is relatively thinner than the upper pouch 100 after sealing, so the lower pouch 100' is more vulnerable to pressure, and in order to solve the conventional problem of the sealed area of the lower pouch opening when the pouch 100' breaks due to the internal pressure of the gas generated in the pouch-type battery case, the thickness of the lower pouch 100' is made thicker than the thickness of the upper pouch 100 before sealing, so it is possible to form a uniform thickness by almost eliminating the deviation between the average thicknesses of the sealed area 101 of the upper pouch and the sealed area 101' of the lower pouch after sealing.

Here, the average thickness of the sealed area 101 of the upper pouch and the average thickness of the sealed area 101' of the lower pouch may satisfy Equation 1 below, and the average thickness of the unsealed area 102 of the upper pouch and the average thickness of the unsealed area 102' of the lower pouch may satisfy Equation 2 below. $0.95 \leq {{D}^{1}}_{TOP} / {{D}^{1}}_{BOTTOM} \leq 1.05$

In Equation 1,
D¹_{TOP} represents the average thickness of the sealed area of the upper pouch, and D¹_{BOTTOM} represents the average thickness of the sealed area of the lower pouch. $0.65 \leq {{D}^{2}}_{TOP} / {{D}^{2}}_{BOTTOM} \leq 0.95$

In Equation 2,
D²_{TOP} represents the average thickness of the unsealed area 102 of the top pouch, and D²_{BOTTOM} represents the average thickness of the unsealed area 102' of the bottom pouch.

Here, the sealed areas 101 and 101' of the upper and lower pouches refer to areas heated and pressurized by the sealing device 500. At this time, the average thickness D¹_{TOP} of the sealed area 101 of the upper pouch and the average thickness D¹_{BOTTOM} of the sealed area 101' of the lower pouch are the average thickness of the area heated and pressed by the sealing device 500, and its margin of error is about 5% or less. The closer the "D¹_{TOP}/D¹_{BOTTOM}" value in the above Equation 1 is to the integer 1, the more equivalent the thickness becomes, and when it is smaller than 0.95 or greater than 1.05, it is difficult to achieve the desired effect because the average thickness D¹_{TOP} of the sealed area 101 of the upper pouch and the average thickness D¹_{BOTTOM} of the sealed area 101' of the lower pouch are unable to be formed in an equivalent level.

In addition, the unsealed areas 102, 102' of the upper and lower pouches refers to areas that are not heated and pressurized by the sealing device 500, and the average thickness D²_{TOP} of the unsealed area 102 of the upper pouch and the average thickness D²_{BOTTOM} of the unsealed area 102' of the lower pouch is the average thickness of the area not heated and pressurized by the sealing device 500, and is also the average thickness of the first upper and lower pouches before sealing. Here, when the range of "D²_{TOP}/D²_{BOTTOM}" in Equation 2 is less than 0.65, the average thickness D²_{BOTTOM} of the unsealed area 102' of the lower pouch becomes excessively greater than the average thickness D²_{TOP} of the unsealed area 102 of the upper pouch, so the internal pressure generated inside the battery case after the sealing process is concentrated in the unsealed area 102 of the upper pouch, which may cause an imbalance in internal pressure. On the other hand, if it exceeds 0.95, the average thickness D¹_{BOTTOM} of the sealed area 101' of the lower pouch and the average thickness D¹_{TOP} of the sealed area 101 of the upper pouch after the sealing process are not formed at an equivalent level (margin of error of average thickness is 5% or less), so it is difficult to achieve the intended purpose. In other words, when the sealing process is performed using the upper and lower pouches 100, 100' having a thickness within the range described in the above Equation 2, it is possible to form thicknesses with an equivalent level in which there is little deviation between the average thicknesses of the upper and lower pouches 100, 100' in the sealed area after the sealing process.

However, the ranges of "D¹_{TOP}/ D¹_{BOTTOM}" in 1 above and "D²_{TOP}/ D²_{BOTTOM}" in 2 above are not limited to the ranges described above, and may be appropriately selected in consideration of the materials of the upper and lower pouches 100, 100', the heating temperature and the heating time of the sealing device 500, the thickness of the electrode assembly 300, and the like.

More specifically, in an exemplary embodiment of the present disclosure, the average thickness D²_{TOP} of the unsealed area 102 of the upper pouch may be in the range of 130 to 165µm, and the average thickness D²_{BOTTOM} of the unsealed area 102' of the lower pouch may be in the range of 175 to 200µm. This may also be appropriately selected in consideration of the material of the upper and lower pouches 100, 100', the heating temperature and the heating time of the sealing device 500, the thickness of the electrode assembly 300, and the like.

Returning to FIG. 3, in the illustrated embodiment, in particular, the first upper step of the upper sealing block 510 is configured to have a smaller height A than the height A' of the first upper step of the lower sealing block 520, and the second upper step of the upper sealing block 510 is also configured to have a smaller height B than the height B' of the second upper step of the lower sealing block 520. In other words, the first and second lower steps 522 of the lower sealing block 520 are made deeper than the first and second upper steps 512 of the upper sealing block 510.

In this way, when the first and second lower steps 522 of the lower sealing block 520 are made relatively deeper, an extra space for the lower pouch 100' to maintain its thickness to be thicker can be secured when a lower pouch 100' having a thicker thickness than the upper pouch 100 is molded by receiving heat and pressure, and even if the heating temperature of the upper sealing block 510 and the lower sealing block 520 are the same, the amount of heat transferred can be reduced due to a decrease in the applied pressure, so that the problem of imbalance in which more heat is supplied to the conventional lower pouch 100' can be solved.

### [Second Embodiment]

In the second embodiment, the present disclosure provides a pouch-type secondary battery in which the upper pouch and the lower pouch in the sealed area have the same level of thickness after a sealing process is performed using a lower pouch having a thicker thickness than the upper pouch.

### Pouch-type secondary battery

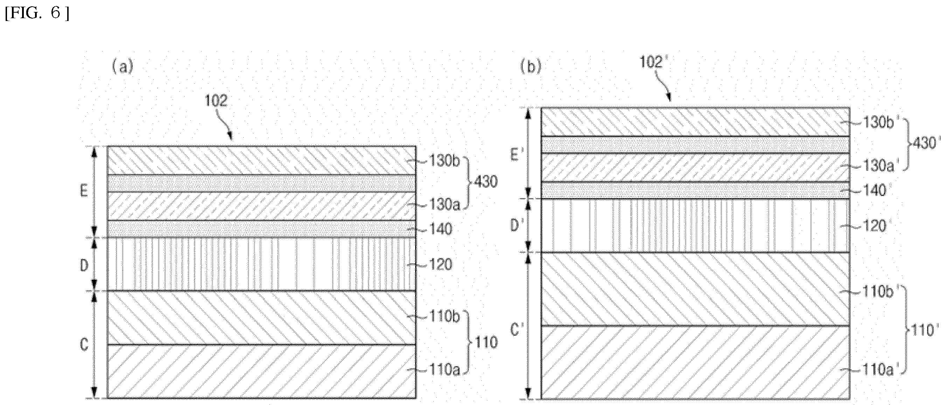

FIG. 5 is a partially enlarged view of the "X-X" cross section of FIG. 2, and FIG. 6(a) and (b) are partially enlarged views of "Y" and "Z" of FIG. 5, respectively.

Referring to FIG. 5, in one example, the upper pouch 100 and the lower pouch 100' may have a three-layer structure each including metal thin film layers 120, 120', first resin layers 110, 110' formed on the inside of the metal thin film layers 120, 120' facing the electrode assembly 300 or the electrode lead 400, and second resin layers 130, 130' formed on the outside of the metal thin film layers 120, 120'. The first resin layers 110, 110' include a polypropylene (PP) resin, and the second resin layers 130, 130' include a polyethylene terephthalate (PET) resin. Here, the first resin layers 110, 110' may further include acid- modified polypropylene (PPa), and PPa may refer to a material having a structure in which maleic acid is grafted to polypropylene (PP). Moreover, the second resin layer may further include a nylon (oriented nylon).

The first resin layers 110, 110' are resin layers in contact with the electrode lead 400 coated with a lead film 410, and the melting point of the first resin layers 110, 110' is lower than that of the second resin layers 130, 130' in order to firmly fuse the upper and lower pouches 100, 100' to the electrode lead 400 or between the upper pouch 100 and the lower pouch 100'. For example, the polypropylene (PP) resin has a melting point lower than that of the polyethylene terephthalate (PET) resin by about 100°*C*.

In a specific example, the deviation between the average thicknesses D, E of the metal thin film layer 120 of the unsealed area of the upper pouch and the average thicknesses D, E of the second resin layer 130 and the average thicknesses D, E' of the metal thin film layer 120' and the second resin layer 130' is less than 5%, and the average thickness C of the first resin layer 110 of the unsealed area of the upper pouch is smaller than the average thickness C' of the first resin layer 110' of the unsealed area of the lower pouch (refer to FIG. 6). This is because the average thicknesses of the sealed area 101 of the upper pouch and the sealed area 101' of the lower pouch area mainly influenced by the thicknesses C, C' of the first resin layer (that is, because the greatest change in the thickness of the first resin layer occurs before and after molding by the sealing device), so the overall thickness of the pouch can be easily controlled by controlling only the thicknesses C, C' of the first resin layer.

More specifically, in the present disclosure, the average thickness C of the first resin layer C in the unsealed area of the upper pouch and the average thickness C' of the first resin layer 110' in the unsealed area 102' of the lower pouch may satisfy Equation 3 below. $0.55 \leq {{D}^{3}}_{TOP} / {{D}^{3}}_{BOTTOM} \leq 0.85$

In Equation 3,
D³_{TOP} represents the average thickness of the first resin layer in the unsealed area of the upper pouch, and D³_{BOTTOM} represents the average thickness of the first resin layer in the unsealed area of the lower pouch.

Under the premise that the average thickness of the sealed area 101 of the upper pouch and the sealed area 101' of the lower pouch is mainly influenced by the thicknesses C, C' of the first resin layers, when the range of "D³_{TOP}/D³_{BOTTOM}" of the above Equation 3 is less than 0.55, the average thickness of the first resin layer 110' of the unsealed area of the lower pouch is excessively thicker than the average thickness of the first resin layer 110 in the unsealed area of the upper pouch, which may cause an imbalance in internal pressure generated inside the battery case, and after the sealing process, the sealed area 101 of the upper pouch may not withstand the internal pressure. On the other hand, if it exceeds 0.85, the average thickness D¹_{BOTTOM} of the sealed area 101' of the lower pouch and the average thickness D¹_{TOP} of the sealed area 101 of the upper pouch after the sealing process are not formed in an equivalent level of thickness (margin of error of average thickness is 5% or less), so it is difficult to achieve the intended purpose. However, the range of "D³_{TOP}/D³_{BOTTOM}" in the above Equation 3 is not limited to the described range, and may be appropriately selected in consideration of the components of the first resin layers 110, 110', the heating temperature and the heating time of the sealing device 500, the thickness of the electrode assembly 300, and the like.

In particular, the average thickness D³_{TOP} of the first resin layer 110 of the unsealed area 102 of the upper pouch of the present disclosure may be in the range of 70 to 85µm, and the average thickness D³_{BOTTOM} of the first resin layer 110' of the unsealed area 102' of the lower pouch may be in the range of 100 to 125µm. This also may be appropriately selected in consideration of the components of the first resin layer 110, 110', the heating temperature and the heating time of the sealing device 500, the thickness of the electrode assembly 300, and the like.

FIG. 6(a) is an enlarged view of "Y" in FIG. 5, and FIG. 6(b) is an enlarged view of "Z" in FIG. 5. In one example, the first resin layers 110, 110' of the upper pouch and the lower pouch may include PP layers 110a, 110a' and PPa layers 110b, 110b', and the second resin layer may include PET layers 130b, 130b', adhesive layers 140, 140', and nylon layers 130a, 130a'. Specifically, based on the PP layers 110a, 110a' of the first resin layers 110, 110' formed on the outer side facing the sealing device 500, they may be stacked in the order of: the PPa layers 110b, 110b', the metal thin film layers 120, 120', the nylon layers 130a, 130a', and the PET layers 130b, 130b'. Adhesive layers 140, 140'can be formed between the metal thin film layers 120, 120' and the nylon layers 130a, 130a', and the adhesive layers 140, 140' may also be formed between the nylon layers 130a, 130a' and the PET layers 130b, 130b'.

The thickness of the unsealed area 102 of the upper pouch is smaller than the thickness of the unsealed area 102' of the lower pouch. Here, the thickness E of the second resin layer 130 of the upper pouch and the thickness D of the metal thin film layer 120 are equal to the thickness E' of the second resin layer 130' and the thickness D' of the metal thin film layer, but the thickness C' of the first resin layer 110 of the lower pouch is thicker than the thickness C of the first resin layer 110 of the upper pouch. This is because, as described above, the average thickness of the sealed areas 101, 101' of the upper and lower pouches is mainly influenced by the thicknesses C, C' of the first resin layers 110, 110', respectively.

In one example, the thickness of the unsealed area 102 of the upper pouch may be 153µm, and the thickness of the unsealed area 102' of the lower pouch may be 183µm. Specifically, the thickness C of the first resin layer of the unsealed area 102 of the upper pouch may be 80µm, the thickness D of the metal thin film layer may be 40µm, and the thickness of the second resin layer including the adhesive layer E may be 33µm. Meanwhile, the thickness C' of the first resin layer of the unsealed area 102' of the lower pouch may be 110µm, and the thicknesses of the metal thin film layer and the second resin layer may have the same thickness as the thicknesses D and E of the metal thin film layer and the second resin layer of the unsealed area 102 of the upper pouch. This is just one example, and may be appropriately changed according to the purpose.

### [Third Embodiment]

In the third embodiment, by using a lower pouch having a thickness greater than that of the upper pouch, the present disclosure provides a pouch-type secondary battery in which the upper pouch and the lower pouch in the sealed area have the same level of thickness after a sealing process.

### Pouch-type secondary battery

In the above-described first embodiment, by setting the average thickness of the unsealed area 102 of the upper pouch to be smaller than the average thickness of the unsealed area 102' of the lower pouch, even when more heat is supplied to the lower pouch 100', an imbalance in average thickness of the sealed areas 101, 101' of the sealed upper and lower pouches is resolved.

The third embodiment basically relates to another exemplary embodiment for resolving thermal imbalance more effectively while maintaining the first shape.

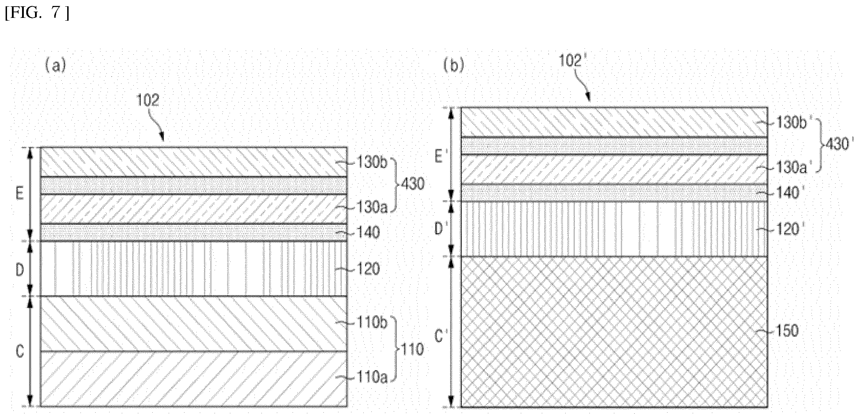

FIG. 7(a) and (b) are partially enlarged views of upper and lower pouches according to another exemplary embodiment of the present disclosure, respectively. Referring to FIG. 7, the elongation rate of the first resin layer 110 of the upper pouch and the first resin layer 110' of the lower pouch are different, and specifically, the elongation rate of the first resin layer 110 of the upper pouch is lower than that of the first resin layer 110 of the upper pouch. Because the elongation rate of the first resin layer 110' of the lower pouch is smaller than the elongation rate of the first resin layer 110 of the upper porch, even when heat and pressure are applied by the sealing device 500, it is possible to reduce the amount of change in thickness of the lower pouch 100'.

As an example, in order to reduce the elongation of the first resin layer 110' of the lower pouch, the first resin layer 110 may be a silylated first resin layer 150. The silylated first resin layer 150 may include a silane compound capable of forming a silane cross-linked polypropylene resin through silylation with polypropylene (PP). The vinyl group of the silane compound reacts with the radical portion of the polypropylene resin to graft the polypropylene (PP) resin.

When a silane compound is included in the first resin layer 110', a cross-linked structure is formed through chemical bonding with the polypropylene (PP) of the first resin layer 110', thereby increasing the melt strength of the polypropylene (PP), improving the viscoelasticity at high temperature, and increasing the mechanical strength at the same time, which makes it possible to lower the elongation rate.

Examples of the silane compound include one or more selected from the group consisting of vinylsilane, vinylmethoxysilane, vinyldimethoxysilane, vinyltrimethoxysilane, vinylethoxysilane, vinyldiethoxysilane, vinyltriethoxysilane, vinylpropoxysilane, vinyldipropoxysilane, and vinyltripropoxysilane. More preferably, it may be one or more among vinylsilane, vinylmethoxysilane, vinyldimethoxysilane, and vinyltrimethoxysilane.

In addition, a crosslinking accelerator may be further included in order to partially promote a cross-link between polypropylene (PP) resins that have formed a silane cross-link. An organotin compound may be used as the crosslinking accelerator, and preferably an octyl tin-based compound or a butyl tin-based compound may be used.

### [Fourth Embodiment]

In the fourth embodiment, by using a lower pouch having a thicker thickness than the upper pouch, the present disclosure provides a pouch-type secondary battery in which the upper pouch and the lower pouch in the sealed area have the same thickness after a sealing process.

### Pouch-type secondary battery

In the above-described first embodiment, by setting the average thickness of the unsealed area 102 of the upper pouch to be smaller than the average thickness of the unsealed area 102' of the lower pouch, even when more heat is supplied to the lower pouch 100', an imbalance in average thickness of the sealed areas 101, 101' of the sealed upper and lower pouches is resolved.

The fourth embodiment basically relates to another exemplary embodiment for resolving thermal imbalance more effectively while maintaining the first shape.

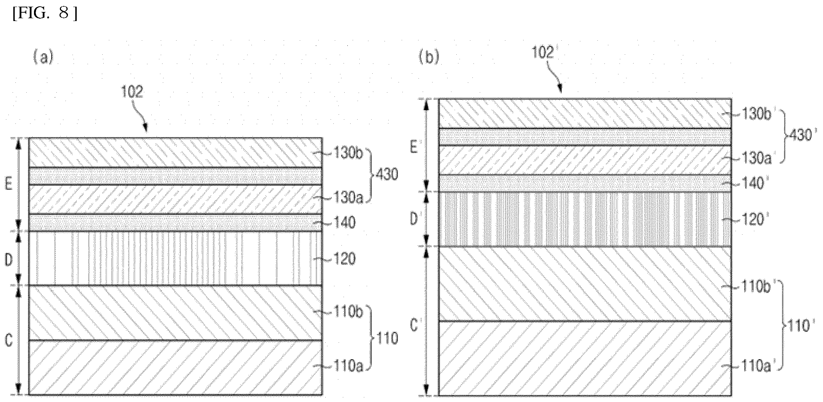

FIG. 8(a) and (b) are partially enlarged views of the upper and lower pouches, respectively, according to another exemplary embodiment of the present disclosure. The exemplary embodiment of FIG. 8 is characterized in that the thermal conductivity of the metal thin film layer 120' of the lower pouch is greater than the thermal conductivity of the metal thin film layer 120 of the upper pouch.

Heat supplied from the lower sealing groove 523 of the sealing device 500 to the second resin layer 130' of the lower pouch is transmitted to the first resin layer 110' by passing through the metal thin film layer 120' of the lower pouch. Here, the amount of heat transferred from the second resin layer 130' to the first resin layer 110' can be reduced by lowering the thermal conductivity of the metal thin film layer 120' of the lower pouch. Therefore, by lowering the amount of heat supplied from the sealing device 500 to the first resin layer 110' by lowering the thermal conductivity of the metal thin film layer 120' of the lower pouch, the retention rate of the first resin layer 110' can be increased.

However, when the thermal conductivity of the metal thin film layer 120' of the lower pouch is too small compared to the thermal conductivity of the metal thin film layer 120 of the upper pouch, the second resin layer 130' of the lower pouch absorbs most of the heat supplied from the lower sealing groove 523 and rather reduces the thickness of the second resin layer 130', reducing the retention rate of the second resin layer 130', so it is preferable to select the metal thin film layer 120' having an appropriate thermal conductivity.

The metal thin film layers 120, 120' may be composed of any one or more among alloys of iron (Fe), carbon (C), chromium (Cr), and manganese (Mn), alloys of iron (Fe), carbon (C), chromium (Cr), and nickel (Ni), aluminum (Al), and copper (Cu). The present disclosure does not limit the material, but preferably, it is preferable to use aluminum (Al) in terms of flexibility. As an example, the metal thin film layer 120 of the upper pouch may be composed of aluminum (Al), and the metal thin film layer 120' of the lower pouch may be composed of an alloy including aluminum (Al) and iron (Fe). Using the characteristic that iron (Fe) has a lower thermal conductivity than aluminum (Al), the metal thin film layer 120' of the lower pouch is made of an alloy containing aluminum (Al) and iron (Fe), thereby relatively reducing the thermal conductivity compared to the metal thin film layer 120 of the upper pouch.

Conversely, the metal thin film layer 120' of the lower pouch may be composed of aluminum (Al), and the metal thin film layer 120 of the upper pouch may be composed of an alloy including aluminum (Al) and copper (Cu). Using the characteristic that copper (Cu) has a higher thermal conductivity than aluminum (Al), the metal thin film layer 120 of the upper pouch is made of an alloy containing aluminum (Al) and copper (Cu), thereby relatively reducing the thermal conductivity compared to the metal thin film layer 120' of the lower pouch.

### [Fifth Embodiment]

In the fifth embodiment, using a lower pouch having a thicker thickness than the upper pouch, the present disclosure provides a manufacturing method of a pouch-type secondary battery in which the upper pouch and the lower pouch in the sealed area have the same thickness after a sealing process.

### Manufacturing method of pouch-type secondary battery

The present disclosure provides a manufacturing method of the pouch-type secondary battery 10 described above. In one example, the manufacturing method of the pouch-type secondary battery 10 according to the present disclosure includes preparing an electrode assembly 300, an electrode lead 400 extending from an electrode tab 420 of the electrode assembly 300, an upper pouch 100 covering the upper surfaces of the electrode assembly 300 and the electrode tab 420, the electrode assembly 300, and a lower pouch 100' covering the lower surfaces of the electrode assembly 300 and the electrode tab 420.

Thereafter, it may include positioning the electrode lead 400 and the electrode assembly 300 between the upper pouch 100 and the lower pouch 100' and sealing by pressurizing and heating the edges of the upper pouch 100 and the lower pouch 100' using a sealing device 500. Here, the average thickness of the sealed area 101 of the upper pouch and the average thickness of the sealed area 101' of the lower pouch may be equal to each other, and the average thickness of the unsealed area 102 of the upper pouch may be smaller than the average thickness of the unsealed area 102' of the lower pouch.

**In** a specific example, in the method for manufacturing the pouch-type secondary battery 10 according to the present disclosure, the average thickness of the sealed area 101 of the upper pouch and the average thickness of the sealed area 101' of the lower pouch may satisfy Equation 1 below, and the average thickness of the unsealed area 102 of the upper pouch and the average thickness of the unsealed area 102' of the lower pouch may satisfy Equation 2 below. $0.95 \leq {{D}^{1}}_{TOP} / {{D}^{1}}_{BOTTOM} \leq 1.05$

In Equation 1,
D¹_{TOP} represents the average thickness of the sealed area of the upper pouch, and D¹_{BOTTOM} represents the average thickness of the sealed area of the lower pouch. $0.65 \leq {{D}^{2}}_{TOP} / {{D}^{2}}_{BOTTOM} \leq 0.95$

In Equation 2,
D²_{TOP} represents the average thickness of the unsealed area of the top pouch, and D²_{BOTTOM} represents the average thickness of the unsealed area of the bottom pouch.

Meanwhile, the upper pouch and the lower pouch in the preparing step each may include metal thin film layers 120, 120', second resin layers 130, 130' formed on the inside facing the electrode lead 400 or the electrode assembly 300 with respect to the metal thin film layers 120, 120', and first resin layers 110, 110' formed on the outer side with respect to the metal thin film layers 120, 120'.

Here, the deviation between the average thickness of the metal thin film layer 120 and the second resin layer 130 of the unsealed area 102 of the upper pouch and the average thickness of the metal thin film layer 120' and the second resin layer 130' of the unsealed area 102' of the lower pouch may be 5% or less, and the average thickness of the first resin layer 110 of the upper pouch may be smaller than the average thickness of the first resin layer 110' of the lower pouch.

Specifically, the average thickness of the first resin layer 110 in the unsealed area 102 of the upper pouch and the average thickness of the first resin layer 110' in the unsealed area 102' of the lower pouch may satisfy Equation 3 below. $0.55 \leq {{D}^{3}}_{TOP} / {{D}^{3}}_{BOTTOM} \leq 0.85$

In Equation 3,
D³_{TOP} represents the average thickness of the first resin layer in the unsealed area of the upper pouch, and D³_{BOTTOM} represents the average thickness of the first resin layer in the unsealed area of the lower pouch.

That is, when manufacturing the pouch-type secondary battery 10 according to the present disclosure, even after a sealing process of heat-sealing the upper pouch 100 and the lower pouch 100' using a lower pouch 100' thicker than the upper pouch 100, the sealed areas 101, 101' of the upper pouch and the lower pouch may have equal thicknesses. Accordingly, an imbalance, in which the sealing part opens due to an internal pressure concentrated only in the sealed area 101' of the lower pouch having a conventionally thin thickness, can be improved.

As above, the present disclosure has been described in more detail through diagrams and exemplary examples.

### Description of Reference Numerals

10: POUCH-TYPE SECONDARY BATTERY
100: UPPER POUCH
100': LOWER POUCH
101: SEALED AREA OF UPPER POUCH
101': SEALED AREA OF LOWER POUCH
102: UNSEALED AREA OF UPPER POUCH
102': UNSEALED AREA OF LOWER POUCH
110, 110': FIRST RESIN LAYER
120,120': METAL THIN FILM LAYER
130, 130': SECOND RESIN LAYER
140,140': ADHESIVE LAYER
150: SILYLATED FIRST RESIN LAYER
300: ELECTRODE ASSEMBLY
400: ELECTRODE LEAD
410: LEAD FILM
420: ELECTRODE TAB
500: SEALING DEVICE
510: UPPER SEALING BLOCK
511: FIRST UPPER STEP
512: SECOND UPPER STEP
513: UPPER SEALING GROOVE
520: LOWER SEALING BLOCK
521: FIRST LOWER STEP
522: SECOND LOWER STEP
523: LOWER SEALING GROOVE
A: HEIGHT OF FIRST UPPER STEP
A': HEIGHT OF FIRST LOWER STEP
B: HEIGHT OF SECOND UPPER STEP
B': HEIGHT OF SECOND LOWER STEP
C, C': THICKNESS OF FIRST RESIN LAYER
D, D': THICKNESS OF METAL THIN FILM LAYER
E, E': THICKNESS OF SECOND RESIN LAYER

## Claims

1. A pouch-type secondary battery (10), comprising:
an electrode assembly (300);
an electrode lead (400) extending from an electrode tab (420) of the electrode assembly (300);
an upper pouch (100) covering an upper surface of the electrode assembly (300) and the electrode lead (400); and
a lower pouch (100') covering a lower surface of the electrode assembly (300) and the electrode lead (400), wherein
while the upper pouch (100) and the lower pouch (100') comprise a sealed area where the edges are sealed and an unsealed area,
an average thickness of the sealed area of the upper pouch (101) and an average thickness of the sealed area of the lower pouch (101') satisfy Equation 1 below, and
an average thickness of the unsealed area of the upper pouch (102) and an average thickness of the unsealed area of the lower pouch (102') satisfy Equation 2 below: $0.95 \leq {{D}^{1}}_{TOP} / {{D}^{1}}_{BOTTOM} \leq 1.05$
In Equation 1,
D¹_{TOP} represents the average thickness of the sealed area of the upper pouch (101'),
D¹_{BOTTOM} represents the average thickness of the sealed area of the lower pouch (101), $0.65 \leq {{D}^{2}}_{TOP} / {{D}^{2}}_{BOTTOM} \leq 0.95$
In Equation 2,
D²_{TOP} represents the average thickness of the unsealed area of the upper pouch (102),
and D²_{BOTTOM} represents the average thickness of the unsealed area of the lower pouch (102').

2. The pouch-type secondary battery (10) of claim 1, wherein
the average thickness D²_{TOP} of the unsealed area of the upper pouch (102) is between 130 and 165µm, and
the average thickness D²_{BOTTOM} of the unsealed area of the lower pouch (102') is between 175 and 200µm.

3. The pouch-type secondary battery (10) of claim 1, wherein
the upper pouch and the lower pouch have a three-layer structure each including a metal thin film layer (120, 120'), a first resin layer (110, 110') formed on an inside of the metal thin film layer (120, 120') facing the electrode assembly (300) or the electrode lead (400), and a second resin layer (130, 130') formed on an outside of the metal thin film layer (120, 120').

4. The pouch-type secondary battery (10) of claim 3, wherein
a deviation between an average thickness of the metal thin film layer (120,120') and the second resin layer (130, 130') in the unsealed area of the upper pouch and an average thickness of the metal thin film layer (120, 120') and the second resin layer (130, 130') in the unsealed area of the lower pouch is 5% or less, and
the average thickness of the first resin layer (110, 110') in the unsealed area of the upper pouch (102) is smaller than the average thickness of the first resin layer (110, 110') in the unsealed area of the lower pouch (102').

5. The pouch-type secondary battery (10) of claim 4, wherein
the average thickness of the first resin layer (110, 110') in the unsealed area of the upper pouch (102) and the average thickness of the first resin layer (110, 110') in the unsealed area of the lower pouch (102') satisfy Equation 3 below: $0.55 \leq {{D}^{3}}_{TOP} / {{D}^{3}}_{BOTTOM} \leq 0.85$
In Equation 3,
D³_{TOP} represents the average thickness of the first resin layer (110, 110') in the unsealed area of the upper pouch (102), and
D³_{BOTTOM} represents the average thickness of the first resin layer (110, 110') in the unsealed area of the lower pouch (102').

6. The pouch-type secondary battery (10) of claim 5, wherein
the average thickness D³_{TOP} of the first resin layer in the unsealed area of the upper pouch (102) is between 70 and 85µm, and
the average thickness D³_{BOTTOM} of the first resin layer (110, 110') in the unsealed area of the lower pouch (102') is between 100 and 125µm.

7. The pouch-type secondary battery (10) of claim 3, wherein
the first resin layer (110, 110') is a polypropylene (PP) resin, and the second resin layer (130, 130') comprises a polyethylene terephthalate (PET) resin.

8. The pouch-type secondary battery (10) of claim 7, wherein
the average thickness of the sealed area of the upper pouch (101) and the sealed area of the lower pouch (101') is mainly influenced by the thickness of the first resin layer (110, 110').

9. The pouch-type secondary battery (10) of claim 3, wherein
an elongation rate of the first resin layer (110, 110') of the lower pouch is smaller than an elongation rate of the first resin layer (110, 110') of the upper pouch.

10. The pouch-type secondary battery (10) of claim 3, wherein
thermal conductivity of the metal thin film layer (120, 120') of the lower pouch is greater than thermal conductivity of the metal thin film layer (120, 120') of the upper pouch.

11. A method of manufacturing a pouch-type secondary battery (10), comprising:
preparing an electrode assembly (300), an electrode lead (400) extending from an electrode tab (420) of the electrode assembly (300), an upper pouch (100) covering an upper surface of the electrode assembly (300) and the electrode tab (420), and a lower pouch (100') covering a lower surface of the electrode assembly (300) and the electrode tab (420); and
positioning the electrode lead (400) and the electrode assembly (300) between the upper pouch (100) and the lower pouch (100'), and sealing edges of the upper pouch (100) and the lower pouch (100') with a sealing device (500) by pressing and heating the edges thereby creating a sealed area of the upper pouch (101), a sealed area of the lower pouch (101'), an unsealed area of the upper pouch (102) and an unsealed area of the lower pouch (102'), wherein
an average thickness of the sealed area of the upper pouch (101) and an average thickness of the sealed area of the lower pouch (101') satisfy Equation 1 below, and an average thickness of the unsealed area of the upper pouch (102) and an average thickness of the unsealed area of the lower pouch satisfy (102') Equation 2 below: $0.95 \leq {{D}^{1}}_{TOP} / {{D}^{1}}_{BOTTOM} \leq 1.05$
In Equation 1,
D¹_{TOP} represents the average thickness of the sealed area of the upper pouch (101),
D¹_{BOTTOM} represents the average thickness of the sealed area of the lower pouch (101'), $0.65 \leq {{D}^{2}}_{TOP} / {{D}^{2}}_{BOTTOM} \leq 0.95$
In Equation 2,
D²_{TOP} represents the average thickness of the unsealed area of the upper pouch (102),
and D²_{BOTTOM} represents the average thickness of the unsealed area of the lower pouch (102').

12. The method of claim 11, wherein
the upper pouch (100) and the lower pouch (100') in the preparing step each comprise a metal thin film layer (120, 120'), a first resin layer (110, 110') formed on an inside of the metal thin film layer (120, 120') facing the electrode assembly (300) or the electrode lead (400), and a second resin layer (130, 130') formed on an outside of the metal thin film layer (120, 120'), wherein
a deviation between an average thickness of the metal thin film layer (120, 120') and the second resin layer (130, 130') in the unsealed area of the upper pouch (102) and an average thickness of the metal thin film layer (120, 120') and the second resin layer (130, 130') in the unsealed area of the lower pouch (102') is 5% or less, and
an average thickness of the first resin layer (110, 110') of the upper pouch (100) is smaller than an average thickness of the first resin layer (110, 110') of the lower pouch (100').

13. The method of claim 12, wherein
the average thickness of the first resin layer (110, 110') in the unsealed area of the upper pouch (102') and the average thickness of the first resin layer (110, 110') in the unsealed area of the lower pouch (102') satisfy Equation 3 below: $0.55 \leq {{D}^{3}}_{TOP} / {{D}^{3}}_{BOTTOM} \leq 0.85$
In Equation 3,
D³_{TOP} represents the average thickness of the first resin layer (110, 110') in the unsealed area of the upper pouch (102), and
D³_{BOTTOM} represents the average thickness of the first resin layer (110, 110') in the unsealed area of the lower pouch (102').

14. The manufacturing method of a pouch-type secondary battery (10) of claim 11, wherein
the sealing device comprises an upper sealing block (510) formed with a two-level upper sealing groove (513) including a first upper step (511) forming a bottom surface and a second upper step (512) formed between the first upper step (511) and a surface; and
a lower sealing block (520) formed with a two-level lower sealing groove including a first lower step (521) forming a bottom surface and a second lower step (522) formed between the first lower step (521) and a surface, wherein
heights of the first upper step (511) and the second upper step (512) of the upper sealing block (510) are smaller than the heights of the first lower step (521) and the second lower step (522) of the lower sealing block (520).

## Patentansprüche

1. Pouch-Typ-Sekundärbatterie (10), umfassend:
eine Elektrodenanordnung (300);
eine Elektrodenleitung (400), die sich von einer Elektrodenfahne (420) der Elektrodenanordnung (300) erstreckt;
eine obere Pouch (100), die eine Oberseite der Elektrodenanordnung (300) und der Elektrodenleitung (400) bedeckt; und
eine untere Pouch (100'), die eine Unterseite der Elektrodenanordnung (300) und der Elektrodenleitung (400) bedeckt, wobei
während die obere Pouch (100) und die untere Pouch (100') einen versiegelten Bereich, wo die Kanten versiegelt sind, und einen unversiegelten Bereich umfassen,
eine durchschnittliche Dicke des versiegelten Bereichs der oberen Pouch (101) und eine durchschnittliche Dicke des versiegelten Bereichs der unteren Pouch (101') die nachstehende Gleichung 1 erfüllen, und
eine durchschnittliche Dicke des unversiegelten Bereichs der oberen Pouch (102) und eine durchschnittliche Dicke des unversiegelten Bereichs der unteren Pouch (102') die nachstehende Gleichung 2 erfüllen: $0 , 95 \leq \frac{{D}_{TOP}^{1}}{{D}_{BOTTOM}^{1}} \leq 1 , 05$
In Gleichung 1,
stellt ${D}_{TOP}^{1}$ die durchschnittliche Dicke des versiegelten Bereichs der oberen Pouch (101') dar, stellt ${D}_{BOTTOM}^{1}$ die durchschnittliche Dicke des versiegelten Bereichs der unteren Pouch (101) dar, $0 , 65 \leq \frac{{D}_{TOP}^{2}}{{D}_{BOTTOM}^{2}} \leq 0 , 95$
In Gleichung 2,
stellt ${D}_{TOP}^{2}$ die durchschnittliche Dicke des unversiegelten Bereichs der oberen Pouch (102) dar, und stellt ${D}_{BOTTOM}^{2}$ die durchschnittliche Dicke des unversiegelten Bereichs der unteren Pouch (102') dar.

2. Pouch-Typ-Sekundärbatterie (10) nach Anspruch 1, wobei
die durchschnittliche Dicke ${D}_{TOP}^{2}$ des unversiegelten Bereichs der oberen Pouch (102) zwischen 130 und 165 µm liegt, und
die durchschnittliche Dicke ${D}_{BOTTOM}^{2}$ des unversiegelten Bereichs der unteren Pouch (102') zwischen 175 und 200 µm liegt.

3. Pouch-Typ-Sekundärbatterie (10) nach Anspruch 1, wobei
die obere Pouch und die untere Pouch eine dreischichtige Struktur aufweisen, die jeweils eine dünne Metallfilmschicht (120, 120'), eine erste Harzschicht (110, 110'), die auf einer Innenseite der dünnen Metallfilmschicht (120, 120') ausgebildet ist, die der Elektrodenanordnung (300) oder der Elektrodenleitung (400) zugewandt ist, und eine zweite Harzschicht (130, 130'), die auf einer Außenseite der dünnen Metallfilmschicht (120, 120') ausgebildet ist, umfasst.

4. Pouch-Typ-Sekundärbatterie (10) nach Anspruch 3, wobei
eine Abweichung zwischen einer durchschnittlichen Dicke der dünnen Metallfilmschicht (120,120') und der zweiten Harzschicht (130, 130') im unversiegelten Bereich der oberen Pouch und einer durchschnittlichen Dicke der dünnen Metallfilmschicht (120, 120') und der zweiten Harzschicht (130, 130') im unversiegelten Bereich der unteren Pouch 5 % oder weniger beträgt, und
die durchschnittliche Dicke der ersten Harzschicht (110, 110') im unversiegelten Bereich der oberen Pouch (102) kleiner ist als die durchschnittliche Dicke der ersten Harzschicht (110, 110') im unversiegelten Bereich der unteren Pouch (102').

5. Pouch-Typ-Sekundärbatterie (10) nach Anspruch 4, wobei
die durchschnittliche Dicke der ersten Harzschicht (110, 110') im unversiegelten Bereich der oberen Pouch (102) und die durchschnittliche Dicke der ersten Harzschicht (110, 110') im unversiegelten Bereich der unteren Pouch (102') die nachstehende Gleichung 3 erfüllen: $0 , 55 \leq \frac{{D}_{TOP}^{3}}{{D}_{BOTTOM}^{3}} \leq 0 , 85$
In Gleichung 3,
stellt ${D}_{TOP}^{3}$ die durchschnittliche Dicke der ersten Harzschicht (110, 110') im unversiegelten Bereich der oberen Pouch (102) dar, und
stellt ${D}_{BOTTOM}^{3}$ die durchschnittliche Dicke der ersten Harzschicht (110, 110') im unversiegelten Bereich der unteren Pouch (102') dar.

6. Pouch-Typ-Sekundärbatterie (10) nach Anspruch 5, wobei
die durchschnittliche Dicke ${D}_{TOP}^{3}$ der ersten Harzschicht im unversiegelten Bereich der oberen Pouch (102) zwischen 70 und 85 µm liegt, und
die durchschnittliche Dicke ${D}_{BOTTOM}^{3}$ der ersten Harzschicht (110, 110') im unversiegelten Bereich der unteren Pouch (102') zwischen 100 und 125 µm liegt.

7. Pouch-Typ-Sekundärbatterie (10) nach Anspruch 3, wobei
die erste Harzschicht (110, 110') ein Polypropylen (PP)-Harz ist, und die zweite Harzschicht (130, 130') ein Polyethylenterephthalat (PET)-Harz umfasst.

8. Pouch-Typ-Sekundärbatterie (10) nach Anspruch 7, wobei
die durchschnittliche Dicke des versiegelten Bereichs der oberen Pouch (101) und des versiegelten Bereichs der unteren Pouch (101') hauptsächlich von der Dicke der ersten Harzschicht (110, 110') beeinflusst wird.

9. Pouch-Typ-Sekundärbatterie (10) nach Anspruch 3, wobei
eine Dehnungsrate der ersten Harzschicht (110, 110') der unteren Pouch kleiner ist als eine Dehnungsrate der ersten Harzschicht (110, 110') der oberen Pouch.

10. Pouch-Typ-Sekundärbatterie (10) nach Anspruch 3, wobei
die Wärmeleitfähigkeit der dünnen Metallfilmschicht (120, 120') der unteren Pouch größer ist als die Wärmeleitfähigkeit der dünnen Metallfilmschicht (120, 120') der oberen Pouch.

11. Verfahren zur Herstellung einer Pouch-Typ-Sekundärbatterie (10), umfassend:
Vorbereiten einer Elektrodenanordnung (300), einer Elektrodenleitung (400), die sich von einer Elektrodenfahne (420) der Elektrodenanordnung (300) erstreckt, einer oberen Pouch (100), die eine Oberseite der Elektrodenanordnung (300) und der Elektrodenfahne (420) bedeckt, und einer unteren Pouch (100'), die eine Unterseite der Elektrodenanordnung (300) und der Elektrodenfahne (420) bedeckt; und
Positionieren der Elektrodenleitung (400) und der Elektrodenanordnung (300) zwischen der oberen Pouch (100) und der unteren Pouch (100'), und das Versiegeln der Kanten der oberen Pouch (100) und der unteren Pouch (100') mit einer Versiegelungsvorrichtung (500) durch Pressen und Erhitzen der Kanten, wodurch ein versiegelter Bereich der oberen Pouch (101), ein versiegelter Bereich der unteren Pouch (101'), ein unversiegelter Bereich der oberen Pouch (102) und ein unversiegelter Bereich der unteren Pouch (102') erzeugt werden, wobei
eine durchschnittliche Dicke des versiegelten Bereichs der oberen Pouch (101) und eine durchschnittliche Dicke des versiegelten Bereichs der unteren Pouch (101') die nachstehende Gleichung 1 erfüllen, und eine durchschnittliche Dicke des unversiegelten Bereichs der oberen Pouch (102) und eine durchschnittliche Dicke des unversiegelten Bereichs der unteren Pouch (102') die nachstehende Gleichung 2 erfüllen: $0 , 95 \leq \frac{{D}_{TOP}^{1}}{{D}_{BOTTOM}^{1}} \leq 1 , 05$
In Gleichung 1,
stellt ${D}_{TOP}^{1}$ die durchschnittliche Dicke des versiegelten Bereichs der oberen Pouch (101) dar, stellt ${D}_{BOTTOM}^{1}$ die durchschnittliche Dicke des versiegelten Bereichs der unteren Pouch (101') dar, $0 , 65 \leq \frac{{D}_{TOP}^{2}}{{D}_{BOTTOM}^{2}} \leq 0 , 95$
In Gleichung 2,
stellt ${D}_{TOP}^{2}$ die durchschnittliche Dicke des unversiegelten Bereichs der oberen Pouch (102) dar, und stellt ${D}_{BOTTOM}^{2}$ die durchschnittliche Dicke des unversiegelten Bereichs der unteren Pouch (102') dar.

12. Verfahren nach Anspruch 11, wobei
die obere Pouch (100) und die untere Pouch (100') im Vorbereitungsschritt jeweils eine dünne Metallfilmschicht (120, 120'), eine erste Harzschicht (110, 110'), die auf einer Innenseite der dünnen Metallfilmschicht (120, 120') ausgebildet ist, die der Elektrodenanordnung (300) oder der Elektrodenleitung (400) zugewandt ist, und eine zweite Harzschicht (130, 130'), die auf einer Außenseite der dünnen Metallfilmschicht (120, 120') ausgebildet ist, umfassen, wobei
eine Abweichung zwischen einer durchschnittlichen Dicke der dünnen Metallfilmschicht (120, 120') und der zweiten Harzschicht (130, 130') im unversiegelten Bereich der oberen Pouch (102) und einer durchschnittlichen Dicke der dünnen Metallfilmschicht (120, 120') und der zweiten Harzschicht (130, 130') im unversiegelten Bereich der unteren Pouch (102') 5 % oder weniger beträgt, und
eine durchschnittliche Dicke der ersten Harzschicht (110, 110') der oberen Pouch (100) kleiner ist als eine durchschnittliche Dicke der ersten Harzschicht (110, 110') der unteren Pouch (100').

13. Verfahren nach Anspruch 12, wobei
die durchschnittliche Dicke der ersten Harzschicht (110, 110') im unversiegelten Bereich der oberen Pouch (102') und die durchschnittliche Dicke der ersten Harzschicht (110, 110') im unversiegelten Bereich der unteren Pouch (102') die nachstehende Gleichung 3 erfüllen: $0 , 55 \leq \frac{{D}_{TOP}^{3}}{{D}_{BOTTOM}^{3}} \leq 0 , 85$
In Gleichung 3,
stellt ${D}_{TOP}^{3}$ die durchschnittliche Dicke der ersten Harzschicht (110, 110') im unversiegelten Bereich der oberen Pouch (102) dar, und
stellt ${D}_{BOTTOM}^{3}$ die durchschnittliche Dicke der ersten Harzschicht (110, 110') im unversiegelten Bereich der unteren Pouch (102') dar.

14. Herstellungsverfahren einer Pouch-Typ-Sekundärbatterie (10) nach Anspruch 11, wobei
die Versiegelungsvorrichtung einen oberen Versiegelungsblock (510), der mit einer zweistufigen oberen Versiegelungsnut (513) ausgebildet ist, die eine erste obere Stufe (511), die eine Bodenfläche bildet, und eine zweite obere Stufe (512), die zwischen der ersten oberen Stufe (511) und einer Oberfläche ausgebildet ist, enthält; und
einen unteren Versiegelungsblock (520) umfasst, der mit einer zweistufigen unteren Versiegelungsnut ausgebildet ist, die eine erste untere Stufe (521), die eine Bodenfläche bildet, und eine zweite untere Stufe (522), die zwischen der ersten unteren Stufe (521) und einer Oberfläche ausgebildet ist, enthält, wobei
die Höhen der ersten oberen Stufe (511) und der zweiten oberen Stufe (512) des oberen Versiegelungsblocks (510) kleiner sind als die Höhen der ersten unteren Stufe (521) und der zweiten unteren Stufe (522) des unteren Versiegelungsblocks (520).

## Revendications

1. Une batterie secondaire de type poche (10), comprenant :
un ensemble d'électrodes (300) ;
une sortie d'électrode (400) s'étendant à partir d'une languette d'électrode (420) de l'ensemble d'électrodes (300) ;
une poche supérieure (100) recouvrant une surface supérieure de l'ensemble d'électrodes (300) et de la sortie d'électrode (400) ; et
une poche inférieure (100') recouvrant une surface inférieure de l'ensemble d'électrodes (300) et de la sortie d'électrode (400), dans laquelle tandis que la poche supérieure (100) et la poche inférieure (100') comprennent une zone scellée où les bords sont scellés et une zone non scellée,
une épaisseur moyenne de la zone scellée de la poche supérieure (101) et une épaisseur moyenne de la zone scellée de la poche inférieure (101') satisfont à l'équation 1 ci-dessous, et
une épaisseur moyenne de la zone non scellée de la poche supérieure (102) et une épaisseur moyenne de la zone non scellée de la poche inférieure (102') satisfont à l'équation 2 ci-dessous : $0.95 \leq \frac{{D}_{TOP}^{1}}{{D}_{BOTTOM}^{1}} \leq 1.05$
Dans l'équation 1,
${D}_{TOP}^{1}$ représente l'épaisseur moyenne de la zone scellée de la poche supérieure (101'), ${D}_{BOTTOM}^{1}$ représente l'épaisseur moyenne de la zone scellée de la poche inférieure (101), $0.65 \leq \frac{{D}_{TOP}^{2}}{{D}_{BOTTOM}^{2}} \leq 0.95$
Dans l'équation 2,
${D}_{TOP}^{2}$ représente l'épaisseur moyenne de la zone non scellée de la poche supérieure (102), et ${D}_{BOTTOM}^{2}$ représente l'épaisseur moyenne de la zone non scellée de la poche inférieure (102').

2. La batterie secondaire de type poche (10) selon la revendication 1, dans laquelle
l'épaisseur moyenne ${D}_{TOP}^{2}$ de la zone non scellée de la poche supérieure (102) est comprise entre 130 et 165 µm, et
l'épaisseur moyenne ${D}_{BOTTOM}^{2}$ de la zone non scellée de la poche inférieure (102') est comprise entre 175 et 200 µm.

3. La batterie secondaire de type poche (10) selon la revendication 1, dans laquelle
la poche supérieure et la poche inférieure ont une structure à trois couches incluant chacune une couche de film métallique mince (120, 120'), une première couche de résine (110, 110') formée sur une face intérieure de la couche de film métallique mince (120, 120') faisant face à l'ensemble d'électrodes (300) ou à la sortie d'électrode (400), et une seconde couche de résine (130, 130') formée sur une face extérieure de la couche de film métallique mince (120, 120').

4. La batterie secondaire de type poche (10) selon la revendication 3, dans laquelle
un écart entre une épaisseur moyenne de la couche de film métallique mince (120,120') et de la seconde couche de résine (130, 130') dans la zone non scellée de la poche supérieure et une épaisseur moyenne de la couche de film métallique mince (120, 120') et de la seconde couche de résine (130, 130') dans la zone non scellée de la poche inférieure est de 5 % ou moins, et
l'épaisseur moyenne de la première couche de résine (110, 110') dans la zone non scellée de la poche supérieure (102) est inférieure à l'épaisseur moyenne de la première couche de résine (110, 110') dans la zone non scellée de la poche inférieure (102').

5. La batterie secondaire de type poche (10) selon la revendication 4, dans laquelle
l'épaisseur moyenne de la première couche de résine (110, 110') dans la zone non scellée de la poche supérieure (102) et l'épaisseur moyenne de la première couche de résine (110, 110') dans la zone non scellée de la poche inférieure (102') satisfont à l'équation 3 ci-dessous : $0.55 \leq \frac{{D}_{TOP}^{3}}{{D}_{BOTTOM}^{3}} \leq 0.85$
Dans l'équation 3,
${D}_{TOP}^{3}$ représente l'épaisseur moyenne de la première couche de résine (110, 110') dans la zone non scellée de la poche supérieure (102), et
${D}_{BOTTOM}^{3}$ représente l'épaisseur moyenne de la première couche de résine (110, 110') dans la zone non scellée de la poche inférieure (102').

6. La batterie secondaire de type poche (10) selon la revendication 5, dans laquelle
l'épaisseur moyenne ${D}_{TOP}^{3}$ de la première couche de résine dans la zone non scellée de la poche supérieure (102) est comprise entre 70 et 85 µm, et
l'épaisseur moyenne ${D}_{BOTTOM}^{3}$ de la première couche de résine (110, 110') dans la zone non scellée de la poche inférieure (102') est comprise entre 100 et 125 µm.

7. La batterie secondaire de type poche (10) selon la revendication 3, dans laquelle
la première couche de résine (110, 110') est une résine de polypropylène (PP), et la seconde couche de résine (130, 130') comprend une résine de polyéthylène téréphtalate (PET).

8. La batterie secondaire de type poche (10) selon la revendication 7, dans laquelle
l'épaisseur moyenne de la zone scellée de la poche supérieure (101) et de la zone scellée de la poche inférieure (101') est principalement influencée par l'épaisseur de la première couche de résine (110, 110').

9. La batterie secondaire de type poche (10) selon la revendication 3, dans laquelle
un taux d'allongement de la première couche de résine (110, 110') de la poche inférieure est inférieur à un taux d'allongement de la première couche de résine (110, 110') de la poche supérieure.

10. La batterie secondaire de type poche (10) selon la revendication 3, dans laquelle
la conductivité thermique de la couche de film métallique mince (120, 120') de la poche inférieure est supérieure à la conductivité thermique de la couche de film métallique mince (120, 120') de la poche supérieure.

11. Un procédé de fabrication d'une batterie secondaire de type poche (10), comprenant :
la préparation d'un ensemble d'électrodes (300), d'une sortie d'électrode (400) s'étendant à partir d'une languette d'électrode (420) de l'ensemble d'électrodes (300), d'une poche supérieure (100) recouvrant une surface supérieure de l'ensemble d'électrodes (300) et de la languette d'électrode (420), et d'une poche inférieure (100') recouvrant une surface inférieure de l'ensemble d'électrodes (300) et de la languette d'électrode (420) ; et
le positionnement de la sortie d'électrode (400) et de l'ensemble d'électrodes (300) entre la poche supérieure (100) et la poche inférieure (100'), et le scellage des bords de la poche supérieure (100) et de la poche inférieure (100') avec un dispositif de scellage (500) en pressant et en chauffant les bords, créant ainsi une zone scellée de la poche supérieure (101), une zone scellée de la poche inférieure (101'), une zone non scellée de la poche supérieure (102) et une zone non scellée de la poche inférieure (102'), dans lequel
une épaisseur moyenne de la zone scellée de la poche supérieure (101) et une épaisseur moyenne de la zone scellée de la poche inférieure (101') satisfont à l'équation 1 ci-dessous, et une épaisseur moyenne de la zone non scellée de la poche supérieure (102) et une épaisseur moyenne de la zone non scellée de la poche inférieure (102') satisfont à l'équation 2 ci-dessous : $0.95 \leq \frac{{D}_{TOP}^{1}}{{D}_{BOTTOM}^{1}} \leq 1.05$
Dans l'équation 1,
${D}_{TOP}^{1}$ représente l'épaisseur moyenne de la zone scellée de la poche supérieure (101), ${D}_{BOTTOM}^{1}$ représente l'épaisseur moyenne de la zone scellée de la poche inférieure (101'), $0.65 \leq \frac{{D}_{TOP}^{2}}{{D}_{BOTTOM}^{2}} \leq 0.95$
Dans l'équation 2,
${D}_{TOP}^{2}$ représente l'épaisseur moyenne de la zone non scellée de la poche supérieure (102), et ${D}_{BOTTOM}^{2}$ représente l'épaisseur moyenne de la zone non scellée de la poche inférieure (102').

12. Le procédé selon la revendication 11, dans lequel
la poche supérieure (100) et la poche inférieure (100') dans l'étape de préparation comprennent chacune une couche de film métallique mince (120, 120'), une première couche de résine (110, 110') formée sur une face intérieure de la couche de film métallique mince (120, 120') faisant face à l'ensemble d'électrodes (300) ou à la sortie d'électrode (400), et une seconde couche de résine (130, 130') formée sur une face extérieure de la couche de film métallique mince (120, 120'), dans lequel
un écart entre une épaisseur moyenne de la couche de film métallique mince (120, 120') et de la seconde couche de résine (130, 130') dans la zone non scellée de la poche supérieure (102) et une épaisseur moyenne de la couche de film métallique mince (120, 120') et de la seconde couche de résine (130, 130') dans la zone non scellée de la poche inférieure (102') est de 5 % ou moins, et
une épaisseur moyenne de la première couche de résine (110, 110') de la poche supérieure (100) est inférieure à une épaisseur moyenne de la première couche de résine (110, 110') de la poche inférieure (100').

13. Le procédé selon la revendication 12, dans lequel
l'épaisseur moyenne de la première couche de résine (110, 110') dans la zone non scellée de la poche supérieure (102') et l'épaisseur moyenne de la première couche de résine (110, 110') dans la zone non scellée de la poche inférieure (102') satisfont à l'équation 3 ci-dessous : $0.55 \leq \frac{{D}_{TOP}^{3}}{{D}_{BOTTOM}^{3}} \leq 0.85$
Dans l'équation 3,
${D}_{TOP}^{3}$ représente l'épaisseur moyenne de la première couche de résine (110, 110') dans la zone non scellée de la poche supérieure (102), et
${D}_{BOTTOM}^{3}$ représente l'épaisseur moyenne de la première couche de résine (110, 110') dans la zone non scellée de la poche inférieure (102').

14. Le procédé de fabrication d'une batterie secondaire de type poche (10) selon la revendication 11, dans lequel
le dispositif de scellage comprend un bloc de scellage supérieur (510) formé avec une rainure de scellage supérieure à deux niveaux (513) incluant un premier gradin supérieur (511) formant une surface de fond et un second gradin supérieur (512) formé entre le premier gradin supérieur (511) et une surface ; et
un bloc de scellage inférieur (520) formé avec une rainure de scellage inférieure à deux niveaux incluant un premier gradin inférieur (521) formant une surface de fond et un second gradin inférieur (522) formé entre le premier gradin inférieur (521) et une surface, dans lequel
les hauteurs du premier gradin supérieur (511) et du second gradin supérieur (512) du bloc de scellage supérieur (510) sont plus petites que les hauteurs du premier gradin inférieur (521) et du second gradin inférieur (522) du bloc de scellage inférieur (520).
